# EUROPEAN PATENT APPLICATION

(11) **EP 4 502 429 A1**
(43) Date of publication of application: **05.02.2025**
(21) Application number: 23774579.9
(22) Date of filing: 10.03.2023
(51) Int. Cl.: F16J 10/04, F04B 39/00, F16J 9/28

(54) **SLIDING MECHANISM**

(30) Priority: 24.03.2022 JP 2022048527
(71) Applicant: Kabushiki Kaisha Riken, Tokyo 102-8202 (JP)
(72) Inventor: ISHIDA, Satoshi, Kumagaya-shi, Saitama 360-8522 (JP); SASAKI, Hayato, Kumagaya-shi, Saitama 360-8522 (JP)
(74) Representative: Lorenz & Kollegen
(86) International application number: PCT/JP2023/009224
(87) International publication number: WO 2023/181980

(57) **Abstract**

[Object] To reduce the amount of wear of a lip ring containing PTFE as a main component.

[Solving Means] A sliding mechanism for a locking piston type oil-free reciprocating compressor includes: a cylinder; and a lip ring. The cylinder includes a metal cylinder body having a cylindrical inner peripheral surface extending in an axial direction and a coating film provided on the inner peripheral surface. The lip ring is attached to a piston reciprocating along the axial direction while swinging in the cylinder and slides with respect to the coating film during the reciprocation of the piston. The lip ring contains PTFE as a main component. The coating film contains PTFE and a binder resin as main components, and a mass ratio of the PTFE to the binder resin is 0.4 or more and 2.0 or less.

## Description

### Technical Field

The present invention relates to a sliding mechanism for a locking piston type oil-free reciprocating compressor.

### Background Art

A general locking piston type oil-free reciprocating compressor is provided with a sliding mechanism in which a lip ring attached to a piston slides with respect to the inner peripheral surface of a metal cylinder. It is known that a lip ring formed of PTFE is capable of achieving an effect of reducing the amount of wear by forming a PTFE transfer film on the inner peripheral surface of the cylinder as the lip ring slides.

Patent Literature 1 discloses a technology for forming a sliding layer including a PTFE powder on the inner peripheral surface of the cylinder in advance. In this technology, since sliding between the sliding layer and the lip ring is sliding between PTFEs, it is possible to achieve the effect of reducing the amount of wear of the lip ring from the beginning of use without forming a PTFE transfer film on the inner peripheral surface of the cylinder.

### Citation List

### Patent Literature

Patent Literature 1: Japanese Patent Application Laid-open No. 2012-031756

### Disclosure of Invention

### Technical Problem

However, the sliding layer that can be formed on the inner peripheral surface of the cylinder by a general method has been confirmed to be incapable of achieving as high an effect of reducing the amount of wear of the lip ring as the PTFE transfer film. Further, there has been no known technology capable of reproducing a configuration similar to the PTFE transfer film in a short time as a method of forming a sliding layer on the inner peripheral surface of a cylinder in advance.

In this regard, it is an object of the present invention to reduce the amount of wear of a lip ring containing PTFE as a main component.

### Solution to Problem

In order to achieve the above-mentioned object, a sliding mechanism for a locking piston type oil-free reciprocating compressor according to an embodiment of the present invention includes: a cylinder; and a lip ring.

The cylinder includes a metal cylinder body having a cylindrical inner peripheral surface extending in an axial direction and a coating film provided on the inner peripheral surface.

The lip ring is attached to a piston reciprocating along the axial direction while swinging in the cylinder and slides with respect to the coating film during the reciprocation of the piston.

The lip ring contains PTFE as a main component.

The coating film contains PTFE and a binder resin as main components, and a mass ratio of the PTFE to the binder resin is 0.4 or more and 2.0 or less.

In this sliding mechanism, the presence of the coating film allows the amount of wear of the lip ring to be reduced at the beginning of use. Further, in this sliding mechanism, by setting the amount of PTFE in the coating film within a predetermined range, the wear of the coating film and the transfer of PTFE forming the lip ring simultaneously progress on the inner peripheral surface of the cylinder body during use, and a transfer film is formed quickly. That is, in this sliding mechanism, the coating film functions to promote the formation of a transfer film on the inner peripheral surface of the cylinder body. Therefore, in this sliding mechanism, it is possible to achieve the high effect of reducing the amount of wear by the transfer film quickly.

The coating film may have a thickness of 2 um or more and 30 um or less.

The inner peripheral surface may have a surface roughness Ra of 0.40 um or less.

The binder resin forming the coating film may be a thermosetting resin having a hardness after heat treatment higher than that of PTFE or a thermoplastic resin having a hardness higher than that of PTFE. Advantageous Effects of Invention

As described above, in accordance with the present invention it is possible to reduce the amount of wear of a lip ring containing PTFE as a main component.

### Brief Description of Drawings

[Fig. 1] Fig. 1 is a schematic diagram of a sliding mechanism of an embodiment of the present invention.
[Fig. 2] Fig. 2 is a diagram showing an operation of the above sliding mechanism.
[Fig. 3] Fig. 3 is a graph showing the measurement results of the amount of wear in a test 2.
[Fig. 4] Fig. 4 is a graph showing the measurement results of the amount of wear in a test 3.
[Fig. 5] Fig. 5 is a graph showing the measurement results of the amount of wear in a test 4.
[Fig. 6] Fig. 6 is a graph showing the measurement results of the amount of wear in a test 5. Mode(s) for Carrying Out the Invention

### <Overall configuration of sliding mechanism 100>

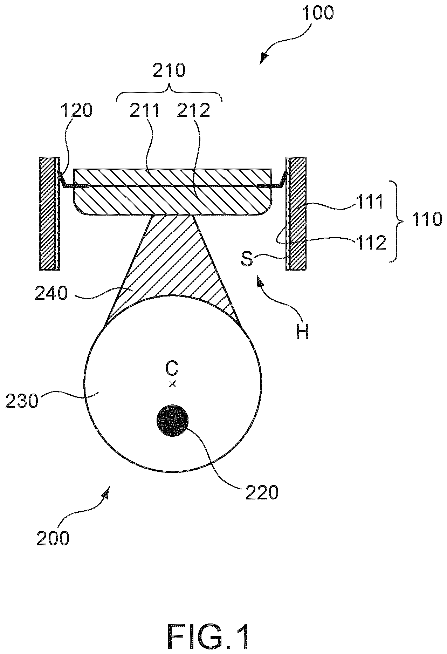

Fig. 1 is a schematic diagram of a sliding mechanism 100 according to an embodiment of the present invention. The sliding mechanism 100 is configured for a locking piston type oil-free reciprocating compressor. The sliding mechanism 100 includes a cylinder 110 and a lip ring 120. The cylinder 110 includes a cylinder body 111 and a coating film 112.

The cylinder body 111 is a metal member and is typically formed of an aluminum alloy, an iron alloy, or the like. The cylinder body 111 includes a through hole H that penetrates in the axial direction (up-and-down direction in the paper). As a result, an internal space surrounded by a cylindrical inner peripheral surface S extending in the axial direction is formed in the cylinder body 111.

The coating film 112 is provided over the entire inner peripheral surface S of the cylinder body 111. The coating film 112 is formed by containing polytetrafluoroethylene (PTFE) and a binder resin as main components. The coating film 112 is provided for the purpose of reducing the amount of wear of the lip ring 120. A detailed configuration of the coating film 112 will be described below.

The lip ring 120 is attached to protrude in the radial direction from the outer peripheral surface of a piston 210 described below. The outer edge portion of the lip ring 120 is curved in the axial direction such that it can be elastically deformed inward by the external force in the radial direction. The lip ring 120 slides against the coating film 112 when it reciprocates together with the piston 210.

Fig. 1 shows a drive mechanism 200 that includes the piston 210. The drive mechanism 200 is configured to cause the piston 210 to reciprocate along the axial direction while swinging in the through hole H of the cylinder 110. The drive mechanism 200 includes a drive shaft 220, an eccentric cam 230, and a connecting rod 240, in addition to the piston 210.

The piston 210 is a disk-shaped member formed of a metal and has an outer diameter that is smaller than the inner diameter of the cylinder 110. The piston 210 includes an upper member 211 and a lower member 212 connected in the axial direction. In the piston 210, the lip ring 120 is sandwiched between the upper member 211 and the lower member 212.

The drive shaft 220 is a shaft member extending in the depth direction of the paper and is inserted through a position offset from a central axis C in the disk-shaped eccentric cam 230. The connecting rod 240 connects the piston 210 and the eccentric cam 230 between the upper end portion integrated with the lower member 212 of the piston 210 and the lower end portion supporting the eccentric cam 230 rotatably about the central axis C.

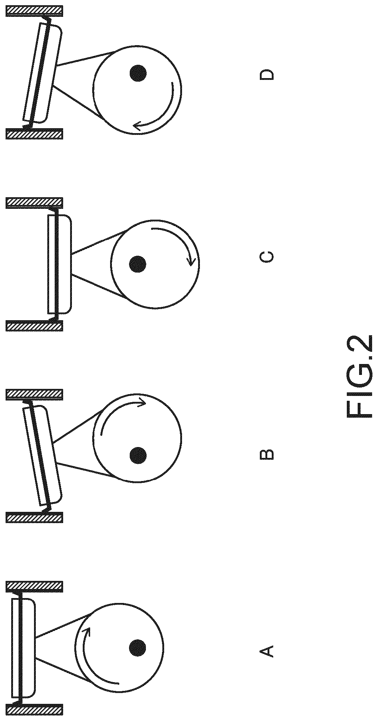

With such a configuration, the drive mechanism 200 is capable of causing the piston 210 to reciprocate in the cylinder 110 of the sliding mechanism 100 by causing the eccentric cam 230 to rotate together with the drive shaft 220. Part A of Fig. 2 to Part D of Fig. 2 are each a diagram showing the operation of the piston 210 during driving of the drive mechanism 200.

Part A of Fig. 2 shows the state in which the piston 210 is at the top dead center. Part B of Fig. 2 shows the state during the intake stroke in which the eccentric cam 230 rotates 90° from the state shown in Part A of Fig. 2 and the piston 210 moves downward in the axial direction while swinging. Part C of Fig. 2 shows the state in which the eccentric cam 230 rotates another 90° from the state shown in Part B of Fig. 2 and the piston 210 has reached the bottom dead center.

Part D of Fig. 2 shows the state during the compression stroke in which the eccentric cam 230 rotates another 90° from the state shown in Part C of Fig. 2 and the piston 210 moves upward in the axial direction while swinging. Then, when the eccentric cam 230 rotates another 90° from the state shown in Part D of Fig. 2, it returns to the state shown in Part A of Fig. 2 where the piston 210 is at the top dead center.

In the sliding mechanism 100, the outer edge portion of the lip ring 120 flexibly deforms such that the contact with the coating film 112 of the cylinder 110 is maintained throughout the entire operation of the piston 210 described above. As a result, in the sliding mechanism 100, the lip ring 120 allows the cylinder 110 and the piston 210 to be airtightly sealed.

### <Detailed configuration of coating film 112>

In the sliding mechanism 100, at the beginning of use, the surface on which the lip ring 120 slides includes the coating film 112 containing PTFE, and thus, the lubricating effect of the coating film 112 improves the sliding property of the lip ring 120. That is, at the beginning of use of the sliding mechanism 100, the presence of the coating film 112 allows the amount of wear of the lip ring 120 to be reduced.

Further, in the sliding mechanism 100, the wear of the coating film 112 and the transfer of PTFE forming the lip ring 120 simultaneously progress on the inner peripheral surface S of the cylinder body 111 during use. As a result, in the sliding mechanism 100, part or all of the coating film 112 that has been present on the inner peripheral surface S of the cylinder body 111 is quickly changed into a transfer film.

For this reason, in the sliding mechanism 100, a transfer film can be formed earlier than in a configuration in which the coating film 112 is not provided on the inner peripheral surface S of the cylinder body 111. That is, in the sliding mechanism 100, the coating film 112 achieves an effect of promoting the formation of a transfer film. Therefore, in the sliding mechanism 100, it is possible to achieve a high effect of reducing the amount of wear by the transfer film quickly.

In the coating film 112, in order to achieve both the lubricating effect at the beginning of use and the effect of promoting the formation of a transfer film, the amount of PTFE needs to be large to some extent. Specifically, the mass ratio of PTFE in the coating film 112 to the binder resin needs to be 0.4 or more, favorably 0.8 or more.

Further, in the coating film 112, in order to achieve sufficient adhesion to the inner peripheral surface S of the cylinder body 111, which allows the form thereof to be maintained for a predetermined period, the amount of the binder to PTFE needs to be not too small. Specifically, the mass ratio of PTFE in the coating film 112 to the binder resin needs to be 2.0 or less.

Further, in the coating film 112, in order to achieve both the lubricating effect at the beginning of use and the effect of promoting the formation of a transfer film, the thickness on the inner peripheral surface S of the cylinder body 111 is favorably large to some extent. Specifically, the thickness of the coating film 112 is favorably 2 um or more, more favorably 5 um or more.

Further, in the coating film 112, in order to achieve sufficient adhesion to the inner peripheral surface S of the cylinder body 111, it is unfavorable that the thickness on the inner peripheral surface S of the cylinder body 111 is too large. Specifically, the thickness of the coating film 112 is favorably 30 um or less, more favorably 20 um or less.

As the binder resin forming the coating film 112, an arbitrary known resin can be selected. Specifically, as the binder resin forming the coating film 112, for example, a thermosetting resin or a thermoplastic resin such as a polyurethane resin, a silicon resin, a polyimide resin, a polyamideimide resin, an epoxy resin, and a phenolic resin can be used.

As the binder resin forming the coating film 112, a thermosetting resin having a hardness after heat treatment higher than that of PTFE or a thermoplastic resin having a hardness higher than that of PTFE is favorably used such that the coating film 112 has sufficient strength even in the case where the amount of PTFE is increased. Note that the hardness according to this embodiment refers to a durometer hardness (type D) measured at room temperature (23 ± 2°C). The hardness of a thermosetting resin after heat treatment and the hardness of a thermoplastic resin, which are used as binder resins, are favorably 50 or more.

In the cylinder body 111, the inner peripheral surface S is favorably smooth to some extent such that the lip ring 120 is not worn too much when during the formation of a transfer film. Specifically, in the cylinder body 111, a surface roughness Ra of the inner peripheral surface S is favorably 0.40 um or less, more favorably 0.20 um or less.

Further, in the cylinder body 111, it is unfavorable that the inner peripheral surface S is too smooth in order that the PTFE forming the lip ring 120 transfers and then sufficiently adheres to the inner peripheral surface S. Specifically, in the cylinder body 111, the surface roughness Ra of the inner peripheral surface S is favorably 0.01 um or more, more favorably 0.10 um or more.

Further, the inner peripheral surface S of the cylinder body 111 may be subjected to surface treatment before forming the coating film 112. As the surface treatment to be performed on the inner peripheral surface S of the cylinder body 111, appropriate one in order to cause the formation of a transfer film to progress more favorably while reducing the amount of wear of the lip ring 120 can be selected.

Examples of the surface treatment in the case where the cylinder body 111 is formed of an aluminum alloy include anodizing treatment, lubricating anodizing treatment impregnated with PTFE or MoS₂, and nickel plating treatment. Examples of the surface treatment in the case where the cylinder body 111 is formed of an iron alloy include Parkerizing treatment and isonite treatment.

The coating film 112 have a configuration in which various fillers are dispersed in PTFE and a binder resin. Further, the lip ring 120 may have a configuration in which various fillers are dispersed in PTFE. The fillers to be used for the coating film 112 and the lip ring 120 can be selected in accordance with the performance to be imparted to the coating film 112 and the lip ring 120.

Examples of fillers that are effective for imparting lubricity to the coating film 112 and the lip ring 120 include graphite, molybdenum disulfide (MoS₂), and boron nitride (BN). Further, examples of fillers that are effective for imparting mechanical strength to the coating film 112 and the lip ring 120 include carbon fiber and glass fiber.

Further, examples of fillers that are effective for imparting wear resistance to the coating film 112 and the lip ring 120 include carbon, coke, and a ceramic particle. Examples of the ceramic particle that can be used as a filler include zinc oxide (ZnO), silicon carbide (SiC), and alumina (Al₂O₃).

In addition, examples of fillers that are effective for imparting thermal conductivity to the coating film 112 and the lip ring 120 include copper (Cu). Further, examples of fillers that are effective for imparting creep resistance to the coating film 112 and the lip ring 120 include a heat-resistant resin such as a polyimide resin and a polyamideimide resin.

By using a common filler for the coating film 112 and the lip ring 120, they become more compatible with each other, which improves the sliding property. Note that different fillers may be used for the coating film 112 and the lip ring 120. Further, a plurality of types of fillers may be combined and used for the coating film 112 and the lip ring 120.

### <Examples and Comparative Examples>

### [Test 1]

In a test 1, in order to evaluate an appropriate mass ratio of PTFE in the coating film 112 to a binder resin, samples of the cylinders 110 provided with the coating films 112 with various different mass ratios of PTFE to the binder resin were prepared. In all samples, the cylinder body 111 having a common configuration in which it was formed of a material with the surface of S45C treated with isonite and the surface roughness of the inner peripheral surface S was 0.20 um was used.

Further, in all samples, the configurations other than the mass ratio of PTFE in the coating film 112 provided on the inner peripheral surface S of the cylinder body 111 to the binder resin were common. Specifically, in each sample, a polyurethane resin was used as the binder resin forming the coating film 112 and the thickness of the coating film 112 was 20 µm.

A sliding test was performed on each sample using a locking piston type oil-free reciprocating compressor as a tester. In the sliding test, the lip ring 120 having a common configuration in which it contained PTFE as a main component and contained carbon and ZnO as fillers was used. The sliding test was performed by continuous driving with the discharge pressure of 0.2 MPa.

For each sample, the presence or absence of formation of a transfer film on the inner peripheral surface S was judged at a plurality of timings after a predetermined time elapsed since the start of the sliding test. The presence or absence of the formation of a transfer film was judged by whether or not a component (e.g., Zn component) of the filler forming the lip ring 120 was detected on the inner peripheral surface S using an energy dispersive X-ray analyzer (EDX) .

Table 1 shows the evaluation results for the samples with mass ratios of PTFE to the binder resin of 0.2, 0.4, 0.8, 1.2, 1.6, 2.0, and 2.4 and the sample in which the coating film 112 is not formed. At each timing, the sample in which formation of a transfer film has been observed is indicated as "A" and the sample in which formation of a transfer film has not been observed is indicated as "B".

**(Table 1)**

| | | Test time | | | |
|---|---|---|---|---|---|
| | | 40h | 60h | 80h | 100h |
| Without coating film | | B | B | B | B |
| Mass ratio of PTFE | 0.2 | B | B | B | B |
| | 0.4 | B | B | B | A |
| | 0.8 | B | B | A | A |
| | 1.2 | B | A | A | A |
| | 1.6 | B | A | A | A |
| | 2.0 | B | B | A | A |
| | 2.4 | B | B | B | B |

As shown in Table 1, in the samples with the mass ratio of PTFE to the binder resin of 0.2 and 2.4, no formation of a transfer film was observed even after 100 hours, similarly to the sample without the coating film 112. On the other hand, in the samples with the mass ratio of PTFE to the binder resin of 0.4 or more and 2.0 or less, formation of a transfer film was observed after 100 hours.

Further, in the samples with the mass ratio of PTFE to the binder resin of 0.8 or more and 2.0 or less, formation of a transfer film was observed at the time when 80 hours elapsed. Further, in the samples with the mass ratio of PTFE to the binder resin of 1.2 or more and 1.6 or less, formation of a transfer film was observed at the time when 60 hours elapsed.

### [Test 2]

In a test 2, samples of the cylinders 110 and the lip rings 120 according to Examples 1 to 3 and Comparative Examples 1 and 2 were prepared. In the samples of the cylinders 110 according to Examples 1 to 3, the mass ratio of PTFE in the coating film 112 to the binder resin was unified to 1.2 as a configuration in which early formation of a transfer film can be expected from the evaluation results of the test 1.

The sample of the cylinder 110 according to Comparative Example 1 is different from the configuration in the above embodiment in that the cylinder body 111 in which the coating film 112 is not formed is used as it is. In the sample of the cylinder 110 according to Comparative Example 2, the mass ratio of PTFE in the coating film 112 to the binder resin was set to 0.3, which is outside the range in the above embodiment.

Table 2 shows the configuration of the coating film 112 and the lip ring 120 for each of Examples 1 to 3 and Comparative Examples 1 and 2. Note that in the sample of the cylinder 110 according to Comparative Example, titanium dioxide (TiO₂) and calcium difluoride (CaF₂) are added to a polyamideimide resin forming the binder resin of the coating film 112.

**(Table 2)**

| | Coating film | | Lip ring |
|---|---|---|---|
| | Mass ratio of PTFE | Binder resin | Filler |
| Example 1 | 1.2 | Polyurethane resin | Carbon ZnO |
| Example 2 | 1.2 | Polyurethane resin | Carbon graphite MoS2 |
| Example 3 | 1.2 | Silicon resin | Carbon graphite MoS2 |
| Comparative Example 1 | None | | Carbon graphite MoS2 |
| Comparative Example 2 | 0.3 | Polyamideimide resin | Cu |

A sliding test was performed using each sample of the cylinder 110 and the lip ring 120 according to each of Examples 1 to 3 and Comparative Examples 1 and 2 and a locking piston type oil-free reciprocating compressor as a tester in the same manner as in the test 1. The conditions for the sliding test for each of the samples according to Examples 1 to 3 and Comparative Examples 1 and 2 was similar to those in the test 1.

In Examples 1 to 3 and Comparative Examples 1 and 2, the amount of wear of the sample of the lip ring 120 was measured at a plurality of timings after a predetermined time elapsed since the start of the sliding test. In the measurement of the amount of wear, for each sample of the lip ring 120, the weight was measured at each timing and the amount of the weight loss from before the sliding test was used as the amount of wear.

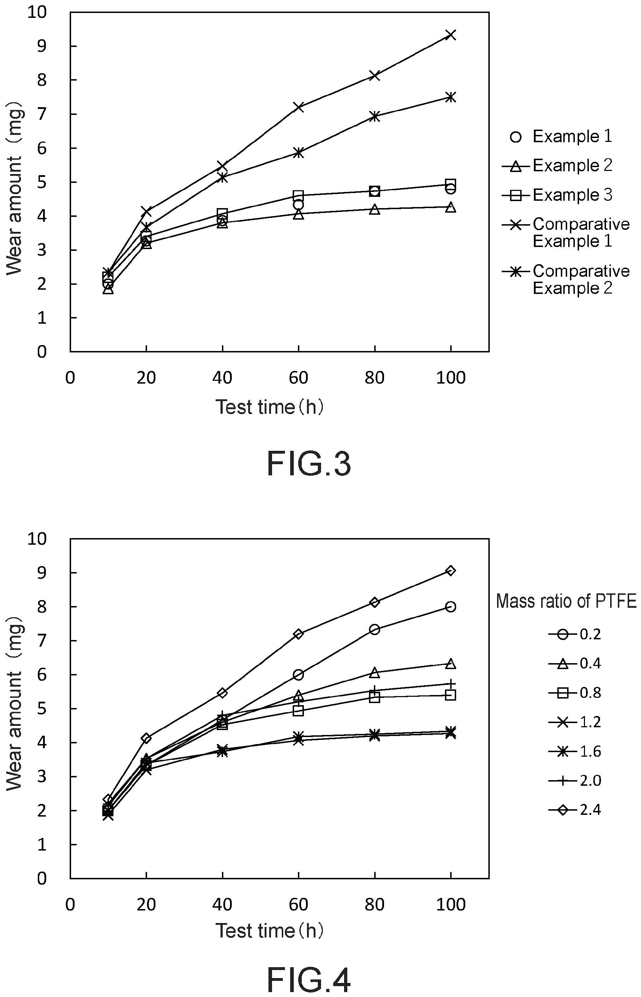

Fig. 3 is a graph showing the measurement results of the amount of wear of each sample of the lip rings 120 according to Examples 1 to 3 and Comparative Examples 1 and 2. In all the samples according to Examples 1 to 3, the amount of wear at each timing was confirmed to be less and the progress of wear was confirmed to be slower than the samples according to Comparative Examples 1 and 2.

### [Test 3]

In a test 3, samples of the cylinders 110 with the variously changed mass ratios of PTFE in the coating film 112 to the binder resin were prepared. In each sample of the cylinder 110, the configurations other than the mass ratio of PTFE in the coating film 112 to the binder resin were similar to those in Example 2 in which the amount of wear of the lip ring 120 was the smallest in the test 2.

A sliding test was performed using each sample of the cylinder 110 and a locking piston type oil-free reciprocating compressor as a tester in the same way as in the test 1. In the sliding test, the lip ring 120 having a common configuration similar to that in Example 2 was used. The conditions for the sliding test for each sample of the cylinder 110 were similar to those in the test 1.

For each sample of the cylinder 110, the amount of wear of the sample of the lip ring 120 was measured at a plurality of timings after a predetermined time elapsed since the start of the sliding test in the same manner as in the test 2. Fig. 4 is a graph showing the measurement results of the amount of wear of the lip ring 120 for each sample of the cylinder 110.

In all samples of the cylinders 110 with the mass ratio of PTFE to the binder resin of 0.4 or more and 2.0 or less, the amount of wear of the lip ring 120 at each timing was confirmed to be less and the progress of wear of the lip ring 120 was confirmed to be slower than the samples of the cylinders 110 with the mass ratio of PTFE to the binder resin of 0.2 and 2.4.

Further, in the samples of the cylinders 110 with the mass ratio of PTFE to the binder resin of 0.8 or more and 2.0 or less, the wear of the lip ring 120 was confirmed to be suppressed more. Further, in the samples of the cylinders 110 with the mass ratio of PTFE to the binder resin of 1.2 or more and 1.6 or less, the wear of the lip ring 120 is confirmed to be further suppressed.

### [Test 4]

In a test 4, samples of the cylinders 110 with the variously changed thicknesses of the coating film 112 formed on the inner peripheral surface S of the cylinder body 111 were prepared. In each sample of the cylinder 110, the configurations other than the thickness of the coating film 112 were similar to those in Example 2 in which the amount of wear of the lip ring 120 was the smallest in the test 2.

A sliding test was performed using each sample of the cylinder 110 and a locking piston type oil-free reciprocating compressor as a tester in the same manner as in the test 1. In the sliding test, the lip ring 120 having a common configuration similar to that in Example 2 was used. The conditions for the sliding test for each sample of the cylinder 110 were similar to those in the test 1.

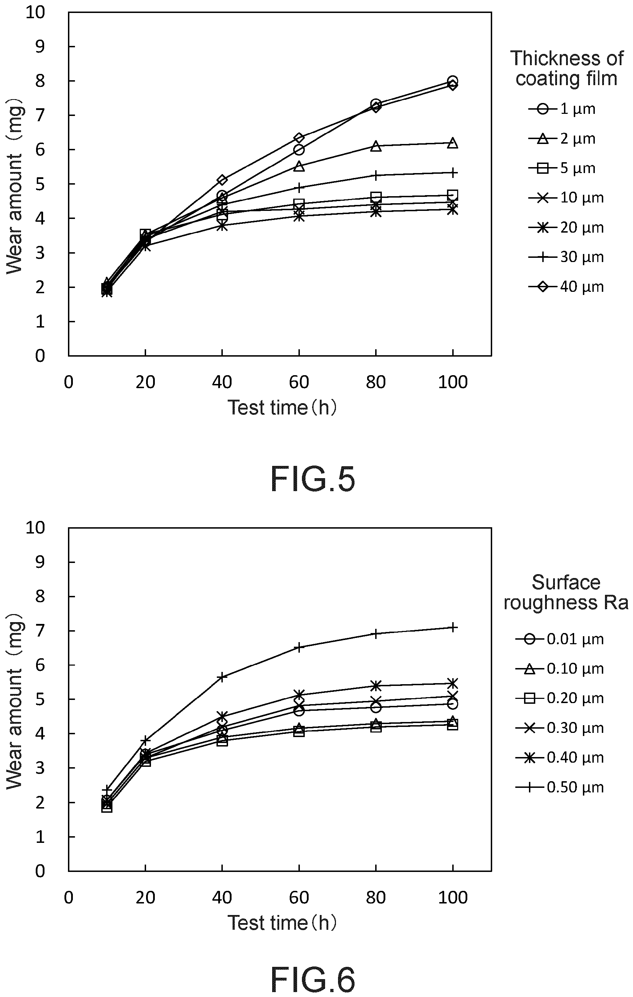

For each sample of the cylinder 110, the amount of wear of the sample of the lip ring 120 was measured at a plurality of timings after a predetermined time elapsed since the start of the sliding test in the same manner as in the test 2. Fig. 5 is a graph showing the measurement results of the amount of wear of the lip ring 120 for each sample of the cylinder 110.

In all samples of the cylinders 110 with the coating film 112 having a thickness of 2 um or more and 30 um or less, the amount of wear of the lip ring 120 at each timing was confirmed to be less and the progress of wear of the lip ring 120 was confirmed to be slower than the samples of the cylinders 110 with the coating film 112 having the thickness of 1 um and 40 um.

Further, in the samples of the cylinders 110 with the coating film 112 having a thickness of 5 um or more and 30 um or less, the wear of the lip ring 120 was confirmed to be suppressed more. Further, in the samples of the cylinders 110 with the coating film 112 having a thickness of 5 um or more and 20 um or less, the wear of the lip ring 120 is confirmed to be further suppressed.

### [Test 5]

In a test 5, samples of the cylinders 110 with the variously changed surface roughnesses Ra of the inner peripheral surface S of the cylinder body 111 were prepared. In each sample of the cylinder 110, the configurations other than the surface roughness Ra of the inner peripheral surface S of the cylinder body 111 were similar to those in Example 2 in which the amount of wear of the lip ring 120 was the smallest in the test 2.

A sliding test was performed using each sample of the cylinder 110 and a locking piston type oil-free reciprocating compressor as a tester in the same manner as in the test 1. In the sliding test, the lip ring 120 having a common configuration similar to that in Example 2 was used. The conditions for the sliding test for each sample of the cylinder 110 were similar to those in the test 1.

For each sample of the cylinder 110, the amount of wear of the sample of the lip ring 120 was measured at a plurality of timings after a predetermined time elapsed since the start of the sliding test in the same manner as in the test 2. Fig. 6 is a graph showing the measurement results of the amount of wear of the lip ring 120 for each sample of the cylinder 110.

In all samples of the cylinders 110 with the surface roughness Ra of the inner peripheral surface S of 0.01 um or more and 0.40 um or less, the amount of wear of the lip ring 120 at each timing was confirmed to be less and the progress of wear of the lip ring 120 was confirmed to be slower than the sample of the cylinder 110 with the surface roughness Ra of the inner peripheral surface S of 0.50 µm.

Further, in the samples of the cylinders 110 with the surface roughness Ra of the inner peripheral surface S of 0.01 um or more and 0.30 um or less, the wear of the lip ring 120 was confirmed to be suppressed more. Further, in the samples of the cylinders 110 with the surface roughness Ra of the inner peripheral surface S of 0.10 µm or more and 0.20 µm or less, the wear of the lip ring 120 is confirmed to be further suppressed.

### Reference Signs List

- 100: sliding mechanism

- 110: cylinder
- 111: cylinder body
- 112: coating film
- 120: lip ring
- 200: drive mechanism
- 210: piston
- 211: upper member
- 212: lower member
- 220: drive shaft
- 230: eccentric cam
- 240: connecting rod

## Claims

1. A sliding mechanism for a locking piston type oil-free reciprocating compressor, comprising:
a cylinder that includes a metal cylinder body having a cylindrical inner peripheral surface extending in an axial direction and a coating film provided on the inner peripheral surface; and
a lip ring that is attached to a piston reciprocating along the axial direction while swinging in the cylinder and slides with respect to the coating film during the reciprocation of the piston,
the lip ring containing PTFE as a main component,
the coating film containing PTFE and a binder resin as main components, a mass ratio of the PTFE to the binder resin being 0.4 or more and 2.0 or less.

2. The sliding mechanism according to claim 1, wherein
the coating film has a thickness of 2 um or more and 30 um or less.

3. The sliding mechanism according to claim 1 or 2, wherein
the inner peripheral surface has a surface roughness Ra of 0.40 um or less.

4. The sliding mechanism according to any one of claims 1 to 3, wherein
the binder resin forming the coating film is a thermosetting resin having a hardness after heat treatment higher than that of PTFE or a thermoplastic resin having a hardness higher than that of PTFE.
